# EUROPÄISCHE PATENTSCHRIFT

(11) **EP 3 672 840 B1**
(45) Veröffentlichungstag und Bekanntmachung des Hinweises auf die Patenterteilung: **02.12.2020**
(21) Anmeldenummer: 18745872.4
(22) Anmeldetag: 20.07.2018
(51) Int. Cl.: B60R 22/20, B60R 22/24

(54) **GURTANORDNUNG FÜR EINEN FAHRZEUGSITZ**
BELT ASSEMBLY FOR A VEHICLE SEAT
SYSTÈME DE CEINTURE CONÇU POUR UN SIÈGE DE VÉHICULE

(30) Priorität: 24.08.2017 DE 102017008021
(43) Veröffentlichungstag der Anmeldung: 01.07.2020
(73) Patentinhaber: Audi AG, 85045 Ingolstadt (DE)
(72) Erfinder: JAKOBS, Bernd, 90453 Nürnberg (DE); FÜRST, Franz, 85114 Buxheim (DE); KRÖNES, Walter, 85080 Gaimersheim (DE); GRUNDHEBER, Christoph, 85080 Gaimersheim (DE)
(86) Internationale Anmeldenummer: PCT/EP2018/069710
(87) Internationale Veröffentlichungsnummer: WO 2019/037971

(56) Entgegenhaltungen:
- DE-A1- 4 001 119
- DE-A1-102006 021 284
- DE-A1-102016 015 234
- DE-T2- 3 873 468

## Beschreibung

Die Erfindung betrifft eine Gurtanordnung für einen Fahrzeugsitz gemäß der Gattung des Patentanspruchs 1. Des Weiteren betrifft die Erfindung ein Fahrzeug mit mindestens einem Fahrzeugsitz und einer solchen Gurtanordnung gemäß der Gattung des Patentanspruchs 7.

Derzeit werden in Fahrzeugen Airbags und Gurtanordnungen eingesetzt, um Insassen in einer Unfallsituation in einer aufrechten Sitzposition zu schützen. Korrespondierende Gurtanordnungen und Fahrzeuge sind in zahlreichen Variationen bekannt. Die Gurtanordnungen können hierbei ein Gurtband und mindestens ein Umlenkelement für das Gurtband aufweisen. Das Umlenkelement kann an einer beweglich gelagerten Haltevorrichtung angeordnet werden, wobei der Umlenkpunkt des Gurtbands durch die Haltevorrichtung verstellbar am Fahrzeug gelagert werden kann. Um zukünftigen Anforderungen bei automatisiert fahrenden Fahrzeugen und daraus resultierenden Komfortstellungen der Fahrzeugsitze gerecht zu werden, werden neuartige Gurtanordnungen entwickelt und im Fahrzeug integriert.

Aus der DE 38 73 468 T2 ist eine Haltevorrichtung für einen Sicherheitsgurt mit einer manuellen Lageverstellung in Fahrzeughochrichtung bekannt, der an einem Aufbau oder einer Karosserie eines Fahrzeugs, wie beispielsweise an einer Dachstrebe oder einer Fahrzeugsäule befestigt ist.

Aus der DE 10 2016 015 234 A1 ist Kraftfahrzeug mit wenigstens einem Sitz und einem dem Sitz zugeordneten Sicherheitsgurtsystem bekannt, umfassend ein einseitig an einem Gurtanschlagpunkt befestigtes Gurtband, das über eine oberhalb des Gurtanschlagpunktes angeordnete Umlenkeinrichtung zu einem Gurtaufroller geführt ist, wobei die Umlenkeinrichtung durch ein zugeordnetes Führungselement verschiebbar gelagert ist, wodurch die Entfernung zwischen dem Gurtanschlagpunkt und der Umlenkeinrichtung veränderbar ist, wobei das Führungselement die Umlenkeinrichtung derart lagert, dass der Abstand zwischen dem Gurtanschlagpunkt und der Umlenkeinrichtung durch ein Verschieben der Umlenkeinrichtung ausgehend von einem Maximum dieses Abstands um wenigstens 20% des Maximums und/oder um wenigstens 30cm und/oder um wenigstens 30% des Abstands zwischen einer Sitzoberfläche des Sitzes und eines Dachs des Fahrzeuginnenraums des Kraftfahrzeugs verkürzbar ist.

Aus der DE 10 2006 021 284 A1 ist eine Sitzanordnung für ein Fahrzeug bekannt, welche mindestens eine erste Sitzreihe mit mindestens einem Fahrersitz und einem Beifahrersitz sowie eine zweite Sitzreihe mit mindestens einem fahrerseitigen Rücksitz und einem beifahrerseitigen Rücksitz aufweist. Der Beifahrersitz oder der beifahrerseitige Rücksitz sind von einer Gebrauchsstellung in eine Nichtgebrauchsstellung bringbar. Der beifahrerseitige Rücksitz oder der Beifahrersitz sind in den hierdurch entstandenen Freiraum in eine Kommunikationsstellung derart verlagerbar, dass sich die Rückenlehne des beifahrerseitigen Rücksitzes oder des Beifahrersitzes zwischen der Rückenlehne des Fahrersitzes und der Rückenlehne des fahrerseitigen Rücksitzes befindet. Der Sicherheitsgurt für den Beifahrersitz ist mittels eines Gelenkarms über ein Gelenk mit der Fahrzeugkarosserie im Bereich des Dachholms zwischen B-Säule und C-Säule des Fahrzeugs verbunden.

Der Erfindung liegt die Aufgabe zu Grunde, eine Gurtanordnung für ein Fahrzeug und ein Fahrzeug mit einer solchen Gurtanordnung bereitzustellen, welche während der Fahrt eine Rückhaltewirkung auf einen Insassen verbessert, welcher auf einem korrespondierenden Fahrzeugsitz sitzt.

Diese Aufgabe wird durch eine Gurtanordnung mit den Merkmalen des Patentanspruchs 1 und durch ein Fahrzeug mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Um eine Gurtanordnung für ein Fahrzeug und ein Fahrzeug mit einer solchen Gurtanordnung bereitzustellen, welche eine Rückhaltewirkung auf einen Insassen während der Fahrt verbessert, welcher auf einem korrespondierenden Fahrzeugsitz sitzt, ist eine Haltevorrichtung, welche ein Umlenkelement für ein Gurtband aufweist, um einen Drehpunkt drehbar an einem Karosserieelement gelagert, wobei ein Antrieb die Haltevorrichtung um den Drehpunkt dreht. Hierbei ist die vorgegebene Ausrichtung der Haltevorrichtung von der aktuellen Neigung der korrespondierenden Rückenlehne abhängig. Dadurch kann in vorteilhafter Weise eine Lageveränderung der Rückenlehne in Fahrzeuglängsrichtung und in Fahrzeughochrichtung durch die Haltevorrichtung während der Fahrt ausgeglichen werden. Dadurch ist auch bei einer sehr flach eingestellten Rückenlehne ein Gurtbandverlauf umsetzbar, welcher den Insassen in vorteilhafter Weise sicher an den Fahrzeugsitz anbindet.

Unter einer Gurtanordnung wird im Folgenden eine Baueinheit mit dem Gurtband verstanden, über welches der Insasse auf dem korrespondierenden Fahrzeugsitz gesichert wird. Das heißt, dass das Gurtband in einer Unfallsituation den Insassen am Fahrzeugsitz anbindet und den Insassen im Fahrzeugsitz zurückhält. Hierbei kann die Gurtanordnung Elemente, wie beispielsweise Umlenkelemente, durch welche das Gurtband geführt ist, und Befestigungsbereiche für das Gurtband aufweisen, welche mit einer Karosserie verbunden sind. Alternativ können diese Elemente auch in den Fahrzeugsitz integriert werden. Üblicherweise ist das Gurtband an seinen Enden über die Befestigungsbereiche an der Fahrzeugkarosserie und/oder einem Fahrzeugsitz befestigt und über das mindestens eine Umlenkungselement umlenkbar. Die Gurtanordnung kann einem Dreipunktgurt entsprechen, bei welchem das Gurtband in einer angelegten Stellung an drei Anbindungspunkten mit der Karosserie gekoppelt ist. Alternativ kann die Gurtanordnung einer anderen bekannten Ausführung mit mehr als drei Anbindungspunkten entsprechen, beispielsweise einem Fünfpunktgurt.

In einem korrespondierenden Fahrzeug ist mindestens ein Fahrzeugsitz angeordnet, wobei eine Position des Fahrzeugsitzes und eine Neigung einer Sitzlehne bzw. Rückenlehne einstellbar ist. Unter der Neigung wird hierbei ein Winkel zwischen einer Sitzfläche und der Rückenlehne des Fahrzeugsitzes verstanden. Jedem Fahrzeugsitz ist jeweils eine Gurtanordnung zugeordnet.

In vorteilhafter Weise kann durch das Drehen der Haltevorrichtung um den Drehpunkt das an der Haltevorrichtung angeordnete Umlenkelement ebenfalls um den Drehpunkt gedreht werden. Hierbei kann der Gurtbandverlauf verändert werden, welcher die Rückhalteeigenschaften der erfindungsgemäßen Gurtanordnung beeinflusst. Durch den Antrieb kann die Ausrichtung der Haltevorrichtung und dadurch die Ausrichtung des Umlenkelements automatisiert angepasst werden.

In vorteilhafter Ausgestaltung der erfindungsgemäßen Gurtanordnung kann der Antrieb die Haltevorrichtung in einer vorgegebenen Ausrichtung festlegen. Dadurch kann die Position des Umlenkelements in vorteilhafter Weise fixiert werden, und eine ungewollte Veränderung der Position des Umlenkelements durch wirkende Kräfte reduziert werden. Dadurch kann der gewünscht Gurtbandverlauf in vorteilhafter Weise auch in der Unfallsituation erhalten bleiben, wobei das Gurtband den Insassen zuverlässig am Fahrzeugsitz anbindet.

In weiterer vorteilhafter Ausgestaltung der erfindungsgemäßen Gurtanordnung kann die Haltevorrichtung an einer Fahrzeugsäule angeordnet werden. Das Gurtband kann beispielsweise zumindest teilweise hinter einer Verkleidung der Fahrzeugsäule verlaufen. Beispielsweise kann das Gurtband von einem unteren als Gurtaufroller ausgeführten Anbindungspunkt zu dem Umlenkpunkt hinter der Verkleidung verlaufen. Die Fahrzeugsäule kann einer B-Säule oder einer C-Säule oder einer D-Säule entsprechen.

In weiterer vorteilhafter Ausgestaltung der erfindungsgemäßen Gurtanordnung kann die Haltevorrichtung und der Drehpunkt in Fahrzeughochrichtung und/oder in Fahrzeuglängsrichtung bewegbar gelagert werden. Hierbei kann die Haltevorrichtung und der Drehpunkt entlang der Fahrzeugsäule bewegt werden. In vorteilhafter Weise kann eine Höhenverstellung und/oder Längsverstellung des mindestens einen Umlenkelements weiterhin durch die Höhen- und/oder Längsverstellung der Haltevorrichtung erfolgen, dadurch kann auf unterschiedliche Körpergrößen der Insassen und/oder auf unterschiedliche Positionen des Fahrzeugsitzes in vorteilhafter Weise Rücksicht genommen und die Anbindung der Insassen an den Fahrzeugsitz weiter optimiert werden.

In weiterer vorteilhafter Ausgestaltung der erfindungsgemäßen Gurtanordnung kann die Haltevorrichtung und der Drehpunkt an einem aus der Fahrzeugsäule ausfahrbaren Teleskoparm angeordnet werden, welcher die Haltevorrichtung in Fahrzeughochrichtung und/oder in Fahrzeuglängsrichtung bewegt. Durch das Ausfahren und Einfahren des Teleskoparms kann in vorteilhafter Weise eine effektive Höhen- und/oder Längsverstellung der Position der Haltevorrichtung und der Position des Drehpunkts auch bei sogenannten halben Fahrzeugsäulen erfolgen.

In vorteilhafter Ausgestaltung des erfindungsgemäßen Fahrzeugs kann mindestens ein Sensor eine Veränderung der Neigung der Rückenlehne detektieren, wobei der Antrieb die Haltevorrichtung in Abhängigkeit der aktuellen Neigung der Rückenlehne um den Drehpunkt dreht. Dadurch kann zu jeder Neigung der Rückenlehne eine korrespondierende Ausrichtung der Haltevorrichtung automatisiert eingenommen werden. Zudem kann die Anpassung der Ausrichtung der Haltevorrichtung in vorteilhafter Weise zeitnah erfolgen.

In weiterer vorteilhafter Ausgestaltung des erfindungsgemäßen Fahrzeugs kann die Haltevorrichtung an der Fahrzeugsäule und der Antrieb in der Fahrzeugsäule angeordnet werden. Der Antrieb kann beispielsweise hinter der Verkleidung angeordnet werden. Dadurch unterscheidet sich die erfindungsgemäße Gurtanordnung für die Insassen von der äußeren Erscheinung kaum von bekannten Gurtanordnungen.

Die für die erfindungsgemäße Gurtanordnung beschriebenen Vorteile und bevorzugten Ausführungsformen gelten auch für das erfindungsgemäße Fahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt/zeigen:
- Fig. 1: eine schematische Darstellung eines Ausschnitts eines erfindungsgemäßen Fahrzeugs mit einem Fahrzeugsitz und einer erfindungsgemäßen Gurtanordnung in einer Ausgangstellung;
- Fig. 2: eine schematische Darstellung einer Haltevorrichtung der erfindungsgemäßen Gurtanordnung aus Fig. 1 in der Ausgangstellung;
- Fig. 3: eine schematische Darstellung des erfindungsgemäßen Fahrzeugs und der erfindungsgemäßen Gurtanordnung aus Fig. 1 in einer Komfortstellung; und
- Fig. 4: eine schematische Darstellung der Haltevorrichtung der erfindungsgemäßen Gurtanordnung aus Fig. 3 in der Komfortstellung.

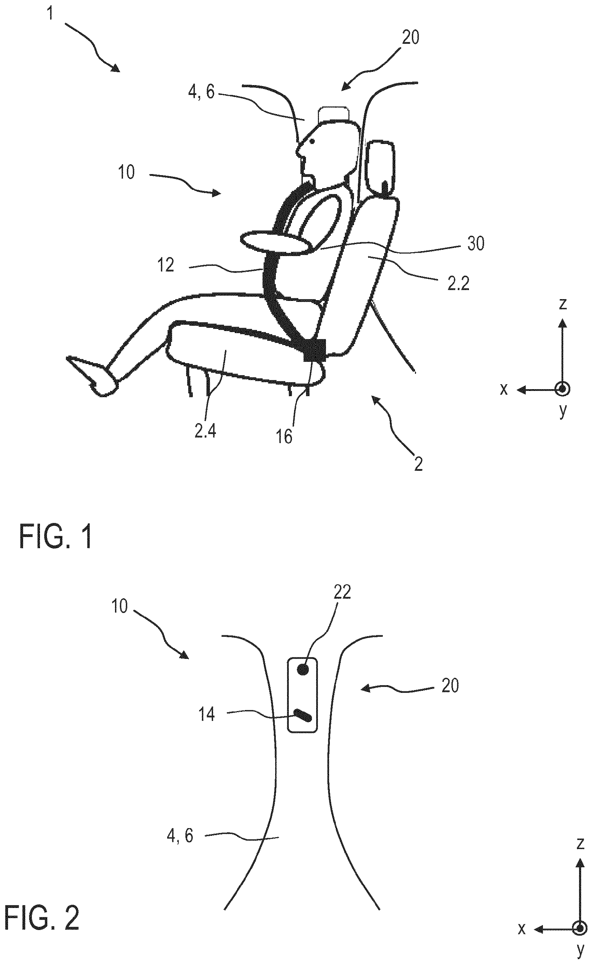

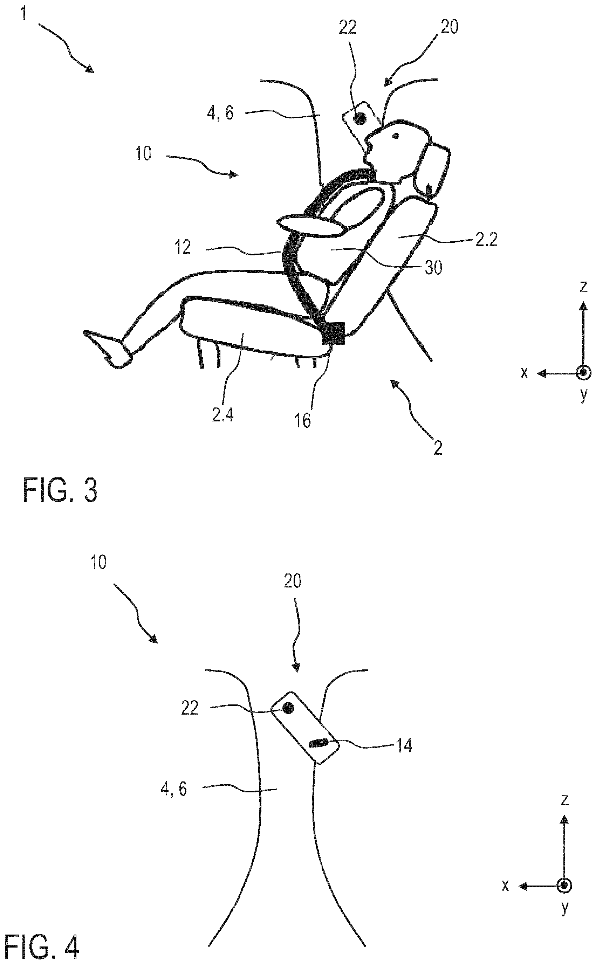

Wie aus Fig. 1 bis 4 ersichtlich ist, weist ein Fahrzeug 1 mindestens einen Fahrzeugsitz 2 und eine korrespondierende Gurtanordnung 10 auf. Eine Position des mindestens einen Fahrzeugsitzes 2 und eine Neigung einer Rückenlehne 2.2 des mindestens einen Fahrzeugsitzes 2 kann von dem Insassen 30 eingestellt werden. Hierbei ist in Fig. 1 eine aufrechte Ausgangsstellung und in Fig. 3 eine geneigte Komfortstellung des Fahrzeugsitzes 2 dargestellt.

Wie aus Fig. 1 bis 4 weiter ersichtlich ist, umfasst die Gurtanordnung 10 für den Fahrzeugsitz 2 ein Gurtband 12 und mindestens ein Umlenkelement 14 für das Gurtband 12, welches an einer beweglich gelagerten Haltevorrichtung 20 angeordnet ist.

Erfindungsgemäß ist die Haltevorrichtung 20 um einen Drehpunkt 22 drehbar an einem Karosserieelement 4 gelagert, wobei ein nicht sichtbarer Antrieb die Haltevorrichtung 20 um den Drehpunkt 22 dreht.

Wie aus Fig. 1 bis 4 weiter ersichtlich ist, umfasst das dargestellte Ausführungsbeispiel der erfindungsgemäßen Gurtanordnung 10 einen nicht dargestellten als Gurtbandaufroller ausgeführten unteren ersten Anbindungspunkt, einen oberen als Umlenkelement 14 ausgeführten zweiten Anbindungspunkt und eine in ein Gurtschloss 16 einführbare Gurtschnalle. Die in das Gurtschloss 16 eingeführte Gurtschnalle bildet hierbei einen dritten Anbindungspunkt und einen zweiten Umlenkpunkt aus. Das Gurtband 12 wird hierbei vom Gurtbandaufroller, dem Umlenkelement 14 und der Gurtschnalle geführt. Die bewegliche Gurtschnalle kann hierbei eine nicht näher dargestellte Öse aufweisen, wobei die Gurtschnalle durch die Öse auf das Gurtband 12 aufgefädelt wird. Im Betriebszustand bildet die Gurtschnalle eine variable Umlenkung aus. Eine Verkleidung des erfindungsgemäßen Fahrzeugs 1 kann das Gurtband 12 zwischen dem unteren Anbindungspunkt und dem Umlenkelement 14 zumindest teilweise abdecken. Die in Fig. 1 und 3 dargestellte Stellung des Gurtbands 12 entspricht jeweils einer Betriebsstellung. In einer nicht dargestellten Ruhestellung ist die Gurtschnalle nicht in das Gurtschloss 16 eingeführt. Der nicht sichtbare Antrieb kann einem Gewindeantrieb z.B. einem Schneckentriebs entsprechen. Dabei kann die Übertragungstechnik, welche die Kraft des Antriebs auf die Haltevorrichtung 20 überträgt ebenfalls von der Verkleidung abgedeckt werden. Der Antrieb legt die Haltevorrichtung 20 in einer vorgegebenen Ausrichtung fest. Dadurch werden die Position des Umlenkelements 14 und der daraus resultierende Gurtbandverlauf ebenfalls festgelegt.

Ein nicht näher dargestelltes erfindungsgemäßes Fahrzeug 1 kann mehrere Fahrzeugsitze 2 aufweisen. Jedem Fahrzeugsitz 2 wird hierbei eine erfindungsgemäße Gurtanordnung 10 zugeordnet. Ist das erfindungsgemäße Fahrzeug 1 in der Lage autonom zu fahren, können während der Fahrt alle Fahrzeugsitze 2 eine in Fig. 3 dargestellte Komfortstellung aufweisen, welche von dem jeweiligen Insassen 30 individuell eingestellt werden kann.

Wie aus Fig. 1 bis 4 weiter ersichtlich ist, betrifft das dargestellte Ausführungsbeispiel der erfindungsgemäßen Gurtanordnung 10 einen Dreipunktgurt, wobei auch eine Ausführung als Fünfpunktgurt vorstellbar und umsetzbar ist.

Wie aus Fig. 1 bis 4 weiter ersichtlich ist, entspricht das an der Haltevorrichtung 20 angeordnete Umlenkelement 14 einer ortsfeste Umlenkung, welche auf Kopfhöhe oder Schulterhöhe des Insassen 30 angeordnet ist. Die Haltevorrichtung 20 ist im dargestellten Ausführungsbeispiel der erfindungsgemäßen Gurtanordnung 10 an einer Fahrzeugsäule 6 angeordnet. Das heißt dass das Karosserieelement 4, um welches die Haltevorrichtung 20 um den Drehpunkt 22 drehbar gelagert ist, als Fahrzeugsäule 6 ausgeführt ist. Hierbei ist die Haltevorrichtung 20 und der Drehpunkt 22 in Fahrzeughochrichtung z und/oder in Fahrzeuglängsrichtung x entlang der Fahrzeugsäule 6 bewegbar gelagert. Durch die Veränderung der Position der Haltevorrichtung 20 in Fahrzeughochrichtung z und/oder in Fahrzeuglängsrichtung x wird auch die Position des Umlenkelements 14 in Fahrzeughochrichtung z und/oder in Fahrzeuglängsrichtung x verändert. Dadurch wird eine Anpassung der erfindungsgemäßen Gurtanordnung 10 an eine Größe des Insassen 30 und/oder an eine Position des Fahrzeugsitzes 2 möglich.

Wie aus Fig. 1 bis 4 weiter ersichtlich ist, ist die vorgegebene Ausrichtung der Haltevorrichtung 20 von einer aktuellen Neigung der korrespondierenden Rückenlehne 2.2 abhängig. Dadurch wird die Position des Umlenkelements 14 sowohl in Fahrzeughochrichtung z, als auch in Fahrzeuglängsrichtung x an die aktuelle Neigung der Rückenlehne 2.2 während der Fahrt angepasst. Dadurch erfolgt eine frühe Ankopplung des Gurtbandes 12 an den Insassen 30, wodurch ein verbesserter Schutz des Insassen 30 möglich ist.

In einem alternativen nicht dargestellten Ausführungsbeispiel der erfindungsgemäßen Gurtanordnung 10, sind die Haltevorrichtung 20 und der Drehpunkt 22 an einem aus der Fahrzeugsäule 6 ausfahrbaren Teleskoparm angeordnet, welcher die Haltevorrichtung 20 in Fahrzeughochrichtung z bewegt. Diese Ausführung ist insbesondere bei Fahrzeugen 1 mit halber B-Säule oder halber C-Säule oder bei Fahrzeugen 1 ohne B-Säule oder ohne C-Säule sinnvoll.

Wie aus Fig. 1 bis 4 weiter ersichtlich ist, kann mindestens ein Sensor eine Veränderung der Neigung der Rückenlehne 2.2 detektieren, wobei der Antrieb die Haltevorrichtung 20 in Abhängigkeit der aktuellen Neigung der Rückenlehne 2.2 um den Drehpunkt 22 dreht. Zudem kann bei dem erfindungsgemäßen Fahrzeug 1 die Haltevorrichtung 20 an der Fahrzeugsäule 6 und der Antrieb in der Fahrzeugsäule 6 angeordnet werden.

### BEZUGSZEICHENLISTE

- 1: Fahrzeug
- 2: Fahrzeugsitz
- 2.2: Rückenlehne
- 2.4: Sitzfläche
- 4: Karosserieelement
- 6: Fahrzeugsäule
- 10: Gurtanordnung
- 12: Gurtband
- 14: Umlenkelement
- 16: Gurtschloss
- 20: Haltevorrichtung
- 22: Drehpunkt
- 30: Insasse
- x: Fahrzeuglängsrichtung
- y: Fahrzeugquerrichtung
- z: Fahrzeughochrichtung

## Patentansprüche

1. Gurtanordnung (10) für einen Fahrzeugsitz (2), mit einem Gurtband (12) und mindestens einem Umlenkelement (14) für das Gurtband (12), welches an einer beweglich gelagerten Haltevorrichtung (20) angeordnet ist und einen Insassen (30) auf dem Fahrzeugsitz (2) in einer Unfallsituation am Fahrzeugsitz (2) anbindet und im Fahrzeugsitz (2) zurückhält,
wobei die Haltevorrichtung (20) um einen Drehpunkt (22) drehbar an einem Karosserieelement (4) gelagert ist, wobei ein Antrieb die Haltevorrichtung (20) um den Drehpunkt (22) dreht und einen Verlauf des Gurtbands (12) zur Beeinflussung der Rückhalteeigenschaften verändert, wobei eine Ausrichtung der Haltevorrichtung (20) von einer aktuellen Neigung einer korrespondierenden Rückenlehne (2.2) des Fahrzeugsitzes (2) abhängig ist, so dass eine Lageveränderung der Rückenlehne (2.2) in Fahrzeuglängsrichtung (x) und in Fahrzeughochrichtung (z) durch die Haltevorrichtung (20) während der Fahrt ausgleichbar ist.

2. Gurtanordnung nach Anspruch 1,
**dadurch gekennzeichnet, dass**
der Antrieb die Haltevorrichtung (20) in einer vorgegebenen Ausrichtung festlegt.

3. Gurtanordnung nach Anspruch 1 oder 2,
**dadurch gekennzeichnet, dass**
die Haltevorrichtung (20) an einer Fahrzeugsäule (6) angeordnet ist.

4. Gurtanordnung nach einem der Ansprüche 1 bis 3,
**dadurch gekennzeichnet, dass**
die Haltevorrichtung (20) und der Drehpunkt (22) in Fahrzeughochrichtung (z) und/oder in Fahrzeuglängsrichtung (x) bewegbar gelagert sind.

5. Gurtanordnung nach Anspruch 3 oder 4,
**dadurch gekennzeichnet, dass**
die Haltevorrichtung (20) und der Drehpunkt (22) entlang der Fahrzeugsäule (6) bewegbar sind.

6. Gurtanordnung nach einem der Ansprüche 3 bis 5,
**dadurch gekennzeichnet, dass**
die Haltevorrichtung (20) und der Drehpunkt (22) an einem aus der Fahrzeugsäule (6) ausfahrbaren Teleskoparm angeordnet sind, welcher die Haltevorrichtung (20) in Fahrzeughochrichtung (z) und/oder in Fahrzeuglängsrichtung (x) bewegt.

7. Fahrzeug (1) mit mindestens einem Fahrzeugsitz (2) und einer Gurtanordnung (10), wobei eine Position des mindestens einen Fahrzeugsitzes (2) und eine Neigung einer Rückenlehne (2.2) des mindestens einen Fahrzeugsitzes (2) einstellbar sind,
**dadurch gekennzeichnet, dass**
die Gurtanordnung (10) nach zumindest einem der Ansprüche 1 bis 6 ausgeführt ist.

8. Fahrzeug nach Anspruch 7,
**dadurch kennzeichnet, dass**
mindestens ein Sensor eine Veränderung der Neigung der Rückenlehne (2.2) detektiert, wobei der Antrieb die Haltevorrichtung (20) in Abhängigkeit der aktuellen Neigung der Rückenlehne (2.2) um den Drehpunkt (22) dreht.

9. Fahrzeug nach Anspruch 7 oder 8,
**dadurch kennzeichnet, dass**
die Haltevorrichtung (20) an der Fahrzeugsäule (6) und der Antrieb in der Fahrzeugsäule (6) angeordnet sind.

## Claims

1. Belt arrangement (10) for a vehicle seat (2), having a belt strap (12) and at least one deflection element (14) for the belt strap (12), which is arranged on a movably mounted holding device (20) and ties a passenger (30) on the vehicle seat (2), in an accident situation, to the vehicle seat (2) and retains said passenger in the vehicle seat (2),
wherein the holding device (20) is mounted so as to rotate about a pivot point (22) on a body element (4), wherein a drive rotates the holding device (20) about the pivot point (22) and changes a profile of the belt strap (12) in order to influence the retention properties, wherein an orientation of the holding device (20) is dependent on a current inclination of a corresponding backrest (2.2) of the vehicle seat (2), such that a position change of the backrest (2.2) in the vehicle longitudinal direction (x) and in the vehicle vertical direction (z) can be compensated for by the holding device (20) during driving.

2. Belt arrangement according to claim 1,
**characterised in that**
the drive fixes the holding device (20) in a predetermined orientation.

3. Belt arrangement according to claim 1 or 2,
**characterised in that**
the holding device (20) is arranged on a vehicle pillar (6).

4. Belt arrangement according to any of claims 1 to 3,
**characterised in that**
the holding device (20) and the pivot point (22) are mounted so as to be movable in the vehicle vertical direction (z) and/or in the vehicle longitudinal direction (x).

5. Belt arrangement according to claim 3 or 4,
**characterised in that**
the holding device (20) and the pivot point (22) can be moved along the vehicle pillar (6).

6. Belt arrangement according to any of claims 3 to 5,
**characterised in that**
the holding device (20) and the pivot point (22) are arranged on a telescopic arm which can be extended out of the vehicle pillar (6) and which moves the holding device (20) in the vehicle vertical direction (z) and/or in the vehicle longitudinal direction (x).

7. Vehicle (1) having at least one vehicle seat (2) and a belt arrangement (10), wherein a position of the at least one vehicle seat (2) and an inclination of a backrest (2.2) of the at least one vehicle seat (2) are adjustable,
**characterised in that**
the belt arrangement (10) is designed according to at least one of claims 1 to 6.

8. Vehicle according to claim 7,
**characterised in that**
at least one sensor detects a change in the inclination of the backrest (2.2), wherein the drive rotates the holding device (20) about the pivot point (22) depending on the current inclination of the backrest (2.2).

9. Vehicle according to claim 7 or 8,
**characterised in that**
the holding device (20) is arranged on the vehicle pillar (6) and the drive is arranged in the vehicle pillar (6).

## Revendications

1. Système de ceinture (10) conçu pour un siège de véhicule (2), comprenant une sangle de ceinture (12) et au moins un élément de renvoi (14) pour la sangle de ceinture (12), qui est agencé sur un dispositif de retenue (20) monté mobile et attache un occupant (30) du siège du véhicule (2) au siège du véhicule (2) en cas d'accident, et le retient dans le siège de véhicule (2),
dans lequel le dispositif de retenue (20) est monté sur un élément de carrosserie (4) pouvant tourner autour d'un point d'appui (22), dans lequel un entraînement fait tourner le dispositif de retenue (20) autour du point d'appui (22) et modifie un tracé de la sangle de ceinture (12) pour influencer les propriétés de retenue, dans lequel une orientation du dispositif de retenue (20) dépend d'une inclinaison actuelle d'un dossier correspondant (2.2) du siège du véhicule (2), de sorte qu'un changement de position du dossier (2.2) dans la direction longitudinale (x) du véhicule et dans la direction verticale (z) du véhicule peut être compensé par le dispositif de retenue (20) pendant la conduite.

2. Système de ceinture selon la revendication 1,
**caractérisé en ce que**
l'entraînement fixe le dispositif de retenue (20) dans une orientation prédéterminée.

3. Système de ceinture selon la revendication 1 ou 2,
**caractérisé en ce que**
le dispositif de retenue (20) est agencé sur un montant de véhicule (6).

4. Système de ceinture selon l'une des revendications 1 à 3,
**caractérisé en ce que**
le dispositif de retenue (20) et le point d'appui (22) sont montés de manière mobile dans la direction verticale (z) du véhicule et/ou dans la direction longitudinale (x) du véhicule.

5. Système de ceinture selon la revendication 3 ou 4,
**caractérisé en ce que**
le dispositif de retenue (20) et le point d'appui (22) peuvent être déplacés le long du montant de véhicule (6).

6. Système de ceinture selon l'une des revendications 3 à 5,
**caractérisé en ce que**
le dispositif de retenue (20) et le point d'appui (22) sont agencés sur un bras télescopique qui peut être étendu à partir du du montant de véhicule (6), et qui déplace le dispositif de retenue (20) dans la direction verticale (z) du véhicule et/ou dans la direction longitudinale (x) du véhicule.

7. Véhicule (1) avec au moins un siège de véhicule (2) et un système de ceinture (10), dans lequel une position du au moins un siège de véhicule (2) et une inclinaison d'un dossier (2.2) du au moins un siège de véhicule (2) peuvent être réglées,
**caractérisé en ce que**
le système de ceinture (10) est conçu selon au moins l'une des revendications 1 à 6.

8. Véhicule selon la revendication 7,
**caractérisé en ce que**
au moins un capteur détecte une modification de l'inclinaison du dossier (2.2), dans lequel l'entraînement fait tourner le dispositif de retenue (20) autour du point d'appui (22) en fonction de l'inclinaison actuelle du dossier (2.2).

9. Véhicule selon la revendication 7 ou 8,
**caractérisé en ce que**
le dispositif de retenue (20) est disposé sur le montant de véhicule (6) et l'entraînement est disposé dans le montant de véhicule (6).
